# EUROPEAN PATENT SPECIFICATION

(11) **EP 3 082 302 B1**
(45) Date of publication and mention of the grant of the patent: **12.06.2019**
(21) Application number: 14800776.8
(22) Date of filing: 20.05.2014
(51) Int. Cl.: H04L 12/66, G06F 13/14, H04L 12/64, H04L 12/28

(54) **REMOTE HOME GATEWAY CONTROLLER, HOME GATEWAY AND TERMINAL CONTROL METHOD**
HOME-GATEWAY-FERNSTEUERUNG, HOME-GATEWAY UND ENDGERÄTESTEUERUNGSVERFAHREN
CONTRÔLEUR DE PASSERELLE DOMESTIQUE À DISTANCE, PASSERELLE DOMESTIQUE ET PROCÉDÉ DE CONTRÔLE DE TERMINAL

(30) Priority: 12.12.2013 CN 201310683348
(43) Date of publication of application: 19.10.2016
(73) Proprietor: ZTE Corporation, Shenzhen, Guangdong 518057 (CN)
(72) Inventor: WAN, Bangrui, Shenzhen Guangdong 518057 (CN); ZUO, Yangmei, Shenzhen Guangdong 518057 (CN)
(74) Representative: Regimbeau
(86) International application number: PCT/CN2014/077943
(87) International publication number: WO 2014/187307

(56) References cited:
- CN-A- 101 075 994
- CN-A- 103 067 231
- CN-A- 103 067 231
- KR-A- 20110 131 655
- US-A1- 2002 031 120
- US-A1- 2003 100 962
- US-A1- 2009 072 991
- US-A1- 2013 290 548

## Description

### Technical Field

The present disclosure relates to the field of Internet of Things, and particularly to a remote home gateway controller, a home gateway, and a terminal control method.

### Background

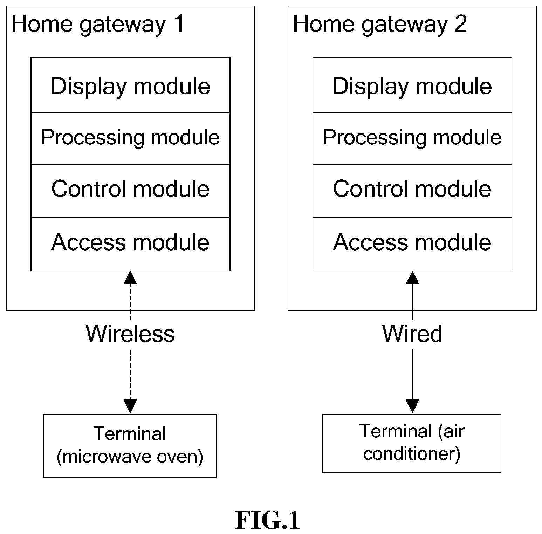

With developments of science and technology, Internet of Things technologies gradually become mature, and people's daily life gradually has a development tendency toward informatization, automatization and networking. As a high-tech product brought to people by Internet of Things age, smart home networks interconnect home terminals through network by turning to existing Internet of Things technologies so as to implement remote control or remote management of these terminals at home, thereby enjoying various rich, diversified, personalized, convenient, comfortable, safe and highly efficient services. Generally, existing various types of home gateways are commonly provided with an access module, a control module, a processing module and a display module. Existing modes are mainly divided into two types as follows:
Referring to FIG. 1, Figure 1 shows a functionally independent home gateway in the existing art. In order to be compatible with different terminals and adapt to different application environments, a plurality of superimposed home gateways are necessitated to be arranged by a user. As shown in Figure 1, the home gateway 1 is dedicated to controlling a microwave oven terminal, and the home gateway 2 is dedicated to controlling an air conditioner terminal; when the user's home also has a refrigerator, an extra home gateway may be likely needed to be set up to implement control of the refrigerator.

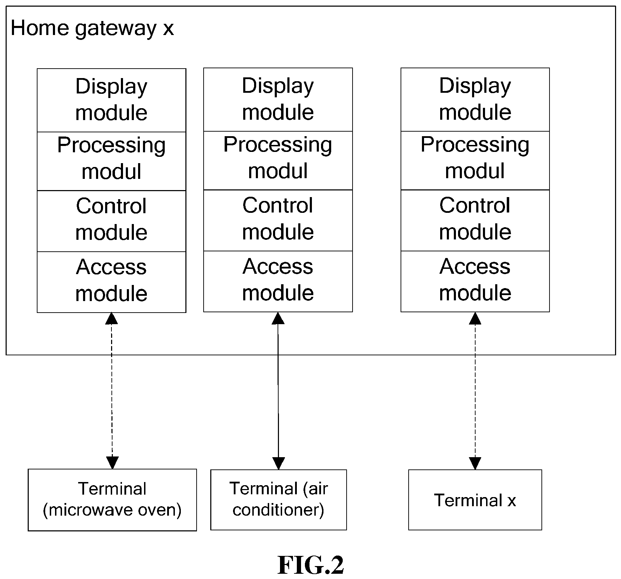

Referring to FIG. 2, Figure 2 shows a functionally combined home gateway in the related art that combines a plurality of functional gateways together, the functionally combined home gateway may be compatible with same terminals and adapt to different application environments in a certain degree. However, when a new terminal is added or the application environment changes, it is required to upgrade home gateways included in the functionally combined home gateway.

It can be known from above that no matter to which type of existing home gateway, when the home gateway is required to be compatible with different terminals and application environments, customized development is required to be made on a corresponding home gateway for upgrading; when a plurality of different terminals are added simultaneously, a plurality of home gateways need to be correspondingly upgraded, respectively, which leads to inconvenient upgrade; meanwhile, as types of terminals increase, service processing logic of the home gateway becomes more complex, so the demand for hardware processing capacity of the home gateway gets higher. Especially, when functions are required to be superimposed, functions of the home gateway need to be expanded. However, hardware performance of the existing home gateways is relatively limited, which cannot meet the foregoing requirements well, and thus the existing home gateway cannot be compatible with various types of terminals and cannot adapt to different application environments. Further technologies are also known from documents US 2009/0072991A1 which relates to a gateway device allowing home network appliances to be introduced and controlled over a control method therefor, US 2013/290548 A1 which relates to a home gateway, cloud server, and method for communication therebetween, and CN 103 067 231 A which relates to a home network application terminal device management system and method.

### Summary

A major technical problem to be solved by embodiments of the present disclosure is to provide a remote home gateway controller, a home gateway, a terminal and a terminal control method, for solving a problem that an existing home gateway can neither be better compatible with various types of terminals nor adapt to different application scenarios.

In order to solve the aforementioned technical problem, a first subject matter of the invention provides a remote home gateway controller according to claim 1.

Claims 2 and 3 concern embodiments of the remote home gateway controller.

A second subject matter of the invention provides a home gateway according to claim 4.

Claims 5 and 6 concern embodiments of the home gateway.

A third subject matter of the invention provides a terminal control method according to claim 7.

Claims 5 and 6 concern embodiments of the terminal control method.

The scope of the invention therefore defines a remote home gateway controller, a home gateway and a terminal control method, as in appended claims 1,4 and, respectively, 7.

### Brief Description of Drawings

FIG. 1 is a schematic diagram showing a structure of an existing functionally independent home gateway system;
FIG. 2 is a schematic diagram showing a structure of an existing functionally integrated home gateway system;
FIG. 3 shows a schematic diagram showing the structure of a remote home gateway controller according to a first embodiment of the present disclosure;
FIG. 4 is a schematic diagram of the structure of a processing module in FIG. 3;
FIG. 5 is a schematic diagram of the structure of a control module in FIG. 3;
FIG. 6 shows a schematic diagram showing the structure of a home gateway according to the first embodiment of the present disclosure;
FIG. 7 shows a schematic structural diagram of a remote interaction module in FIG. 6;
FIG. 8 shows a schematic diagram showing the structure of another remote home gateway controller according to the first embodiment of the present disclosure;
FIG. 9 is a schematic diagram of the structure of a terminal according to the first embodiment of the present disclosure;
FIG. 10 shows a schematic diagram showing the structure of a remote home gateway controller system according to a second embodiment of the present disclosure;
FIG. 11 shows a flow chart for control of a terminal according to the second embodiment of the present disclosure;
FIG. 12 shows a flow chart for control of a terminal by generating terminal status control data through the remote home gateway controller according to the second embodiment of the present disclosure; and FIG. 13 shows a flow chart for control of a terminal by generating terminal control display data through the remote home gateway controller according to the second embodiment of the present disclosure.

### Detailed Description

In embodiments of the present disclosure, by using a cloud server or remote server and so on as a home gateway controller (collectively referred to as a remote home gateway controller), processing functions such as service logic operation in existing home gateway controllers are transferred to the remote home gateway controller. That is, in the embodiments of the present disclosure, the home gateway need not execute the processing functions such as service logic operation; instead, the processing functions such as service logic operation can be executed by the remote home gateway controller. Therefore, the home gateway controller in the present disclosure may not be provided with service logic processing capacity; when the home gateway controller needs upgrade for being compatible with a plurality of terminals or for adapting to different application environments, a single upgrade is only required to be applied to the remote home gateway controller; in addition, the remote home gateway controller has better hardware performance and expansion capability than the existing home gateways, and thus can better complete more complex service logic processing and better meet function expansion and other requirements. As a result, the remote home gateway controller is better compatible with various types of terminals and better adapts to different application environments than the existing home gateways. The present disclosure is further described in detail with reference to embodiments and accompanying drawings as follows.

### A first embodiment:

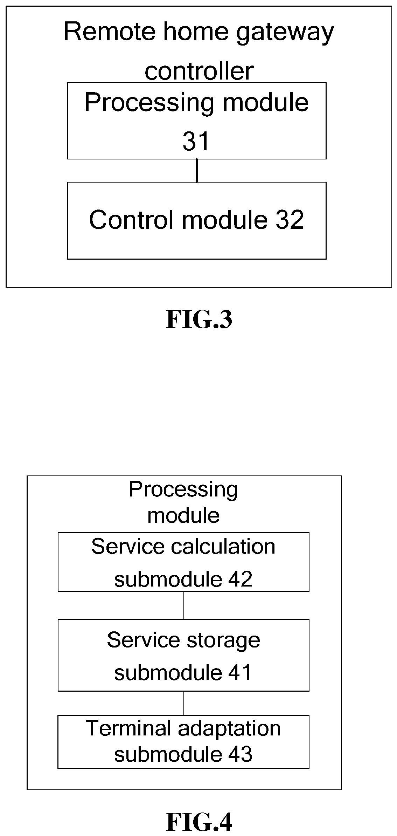

Referring to FIG. 3, Figure 3 shows a remote home gateway controller according to the embodiment, including: a processing module 31 and a control module 32, where
the processing module 31 is configured to generate terminal control data; the processing module in the embodiment may invoke, based on data (including at least one of terminal status data, interface display data and operation instruction data that needs to be processed by the remote home gateway controller) reported by a home gateway, corresponding service logic to generate terminal control data, or directly invoke corresponding service logic to generate the terminal control data according to a preset rule; and
the control module 32 is configured to access a home gateway and send the terminal control data generated by the processing module to the home gateway.

In the embodiment, the control module may support the home gateway to be accessed to the remote home gateway controller according to a variety of standard protocols such that communication interaction may be implemented between the home gateway and the remote home gateway controller. The data reported by the home gateway may be sent to the processing module for corresponding processing through the control module.

The terminal control data generated by the processing module 31 may be sent to a corresponding home gateway through the control module, then the home gateway may implement corresponding control of a corresponding terminal according to the terminal control data. For example, it is assumed that the terminal is an air conditioner, temperature regulation and operating mode regulation or the like for the terminal may be controlled based on the terminal control data.

The foregoing processing module and the control module may be implemented by hardware such as a CPU or DSP in combination with a memory.

Specifically, referring to FIG 4, the processing module in the embodiment includes a service storage submodule 41, a service calculation submodule 42 and a terminal adaptation submodule 43, where
the service storage submodule 41 is configured to store service logic; in the embodiment, the service logic is control program for controlling various terminals to implement various functions, and thus the service logic may be prewritten into the service storage submodule; of course, as changes of terminal types and application environments, the service logic may be upgraded and processed according to actual situations, and the upgrade includes at least one of updating the original service logic, deleting the original service logic or adding new service logic and so on; and
the terminal adaptation submodule 43 is configured to store adaptation data of various terminals for being read by corresponding service logic; in the embodiment, various terminals include different types of terminals, i.e., terminals with different functions, for example, an air conditioner, a microwave oven, an electric refrigerator or the like, and the various terminals further may include terminals with the same functions but different models, for example, a Model A air conditioner and a Model B air conditioner, or a wall-mounted air conditioner and a floor standing air conditioner, etc.

The adaptation data stored in the terminal adaptation submodule 43 in the embodiment supports terminal access, control and display interface, that is, the adaptation data is converted data of service logic operation of terminal specific field in a standard protocol.

During implementing upgrading operation, the adaptation data stored in the terminal adaptation submodule may be correspondingly upgraded, specifically including adding adaptation data, updating the original adaptation data, or deleting the original adaptation data, etc.

The service calculation submodule 42 is configured to invoke corresponding service logic from service logic stored in the service storage submodule to conduct service logic operation so as to generate terminal control data. The service logic in the embodiment mainly is categorized into two types: one type is related to terminal status data, namely, service logic for controlling the current status of the terminal; the other type is related to interface display data, namely, service logic for controlling interface display. The terminal control data generated by the service calculation submodule through conducting service logic operation is also categorized into two types: one type is terminal status control data, and the other type is terminal control display data.

Invoking, by the service calculation submodule in the embodiment, corresponding service logic from service logic stored in the service storage submodule 41 to conduct service logic operation so as to generate terminal control data includes:
Invoking, by the service calculation submodule 42, corresponding service logic according to data sent by a gateway control submodule, and conducting logic operation to obtain the terminal control data according to the data, the invoked service logic and adaptation data read by the service logic;
In the embodiment, the data sent by the gateway control submodule includes at least one of terminal status data fed back by the home gateway, interface display data and operation instruction data; the terminal status data may be data fed back to the home gateway from the terminal, the interface display data may be data directly set up on the home gateway by a user or interface display data generated by the terminal control data, and the operation instruction data may be operation data sent through the home gateway by the user or operation data generated by the terminal control data; or
invoking, by the service calculation submodule 42, corresponding service logic according to a preset rule, and conducting logic operation to obtain the terminal control data according to the service logic and adaptation data read by the service logic. For example, it can be preset that when terminal initialization or home gateway initialization is implemented, the service calculation submodule 42 directly invokes corresponding service logic, and conducts logic operation to obtain the terminal control data according to corresponding adaptation data read by the service logic, thereby realizing the control of a corresponding terminal.

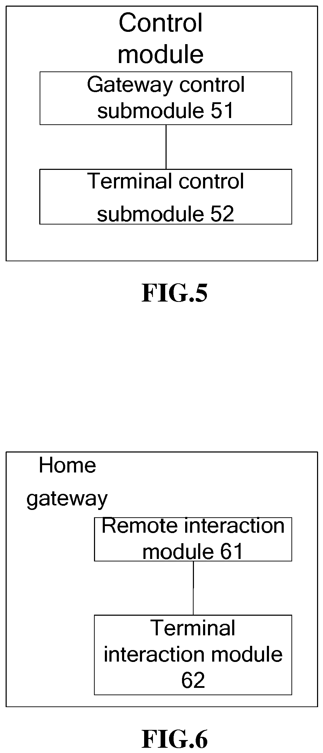

Referring to FIG. 5, the control module in the embodiment includes a gateway control submodule 51 and a terminal control submodule 52, where
the gateway control submodule 51 is configured to access a home gateway and send data reported by the home gateway to the service calculation submodule.

In the embodiment, the data reported by the home gateway includes at least one of terminal status data fed back by the home gateway, interface display data and operation instruction data; and the gateway control submodule supports the home gateway to be accessed to the remote home gateway controller according to a variety of standard protocols, or may also support the home gateway to be accessed to the remote home gateway controller by using a unified standard protocol. It should be noted that the number of the home gateway in the embodiment may be one or more according to actual situations. The standard protocol in the embodiment may be wired protocol or wireless protocol. When a home gateway is accessed to the gateway control submodule, legitimacy of the accessed home gateway is verified by means of verifying at least one of an IP address, a username or a password, etc. After the home gateway is accessed to the gateway control submodule in the embodiment, the gateway control submodule may receive data reported by the home gateway and report the data to the processing module for processing. Data included in the home gateway may include terminal status data, interface display data, or operation instruction data obtained by the home gateway according to an external control instruction, etc.

The terminal control submodule is configured to send terminal control data which is from the processing module to a corresponding home gateway; for example, when the terminal control data is terminal control display data, the terminal control data is forwarded to the home gateway, then an interface of the home gateway is controlled for display; and when the terminal control data is terminal status control data, the terminal control data is forwarded to a corresponding terminal through the home gateway to implement the control of the terminal.

It should be noted that the remote home gateway controller in the embodiment may adopt a distributed architecture. When processing capacity of the remote home gateway controller is not sufficient to meet actual requirements, an objective of expanding the capacity of the remote home gateway controller is achieved by increasing distributed nodes.

Referring to FIG. 6, the home gateway provided in the embodiment includes a remote interaction module 61 and a terminal interaction module 62, where
the remote interaction module 61 is configured to access the home gateway to a remote home gateway controller, upload terminal status data sent by the terminal interaction module to the remote home gateway controller, and receive terminal control data sent by the remote home gateway controller; and the remote interaction module in the embodiment supports the home gateway to be accessed to a remote gateway controller in a standard protocol and enables the home gateway to communicate with the remote gateway controller.

The terminal interaction module 62 in the embodiment is configured to access a terminal to send terminal status data fed back by the terminal to the remote interaction module. The terminal interaction module in the embodiment also supports one type or different types of terminals to be accessed in standard protocols and can control different types of terminals. That is, one home gateway controller in the embodiment may support a plurality of types of terminals to be accessed, which may simplify types and quantities of home gateways to some degree and make management more concise and effective.

It should be noted that that the home gateway in this embodiment may not totally have service logic processing capacity at all, and all service logic processing may be executed on the remote home gateway controller. In such a case, all terminal control data sent by the home gateway to the terminal are derived from the remote home gateway controller. Of course, the home gateway may have certain service logic processing capacity, and may be used as a backup or for processing some simple service logic, etc.

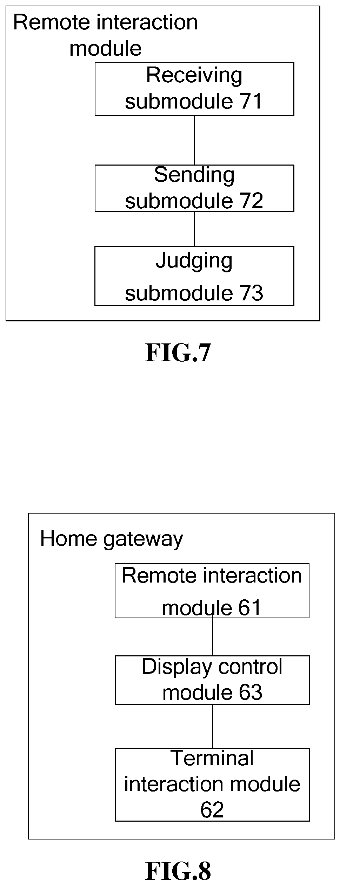

In this embodiment, referring to FIG. 7, the remote interaction module includes a receiving submodule 71, a sending submodule 72 and a judging submodule 73, where
the receiving submodule 71 is configured to receive terminal status data sent by the terminal interaction module, send the terminal status data to the remote home gateway controller through the sending submodule 72, receive terminal control data sent by the remote home gateway controller and send the terminal control data to the judging submodule; and
the judging submodule 73 is configured to send the terminal control data to the terminal interaction module through the sending submodule 72 when the terminal control data is judged to be terminal status control data, send the terminal control data to a corresponding terminal through the terminal interaction module to implement control of the terminal; and send the terminal control data to the home gateway for display when the terminal control data is judged to be terminal control display data.

Correspondingly, on a basis of FIG. 6, the home gateway may be additionally provided with a display control module, for example, referring to FIG. 8, the home gateway further includes a display control module 63 which is used to display the terminal control display data.

The display control module in the embodiment includes a display submodule and a selecting submodule, where
the display submodule is configured to display the received terminal control data; and
the selecting submodule is configured to select corresponding operation instruction data according to an external control instruction (for example, operation conducted by a user according to displayed operating interface), send the operation instruction data to the terminal interaction module through the sending submodule, and then send the operation instruction data to a terminal to implement control of the terminal (when the operation selected by the user is to directly control the terminal), or send the operation instruction data to the remote home gateway controller (when the operation selected by the user is that after the operation instruction data selected by the user is processed by the remote home gateway controller, the operation instruction data is resent to the terminal), so that the remote home gateway controller invokes corresponding service logic according to the operation instruction data and then conducts logic operation to generate the terminal control data.

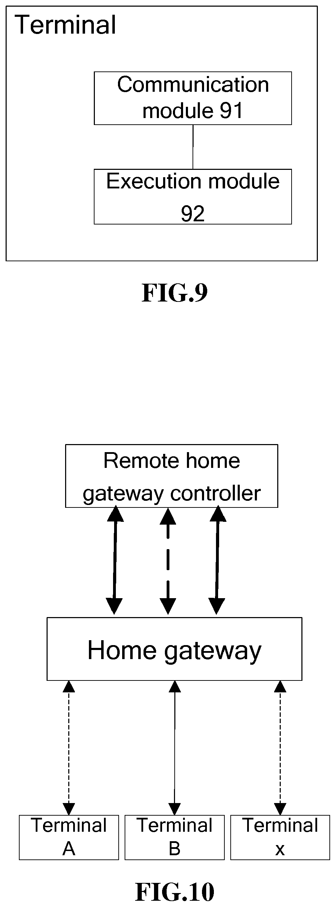

Referring to FIG. 9, the embodiment further provides a terminal, which may be an air conditioner, a refrigerator, a water heater and so on, including a communication module 91 and an execution module 92, where
the communication module 91 is configured to access the terminal to a home gateway, send terminal status data of the terminal to the home gateway, and receive terminal control data sent by the home gateway; where the terminal control data is generated by a remote home gateway controller and sent to the home gateway; and
the execution module 92 is configured to execute corresponding control according to the terminal control data received by the communication module, for example, the execution module 92 can execute the operation of increasing temperature, decreasing temperature and adjusting rotation speed or the like according to the terminal control data.

Preferably, the foregoing communication module may be implemented by a CPU, an antenna and a modem; and the execution module may be implemented by hardware such as a CPU or DSP.

### A second embodiment:

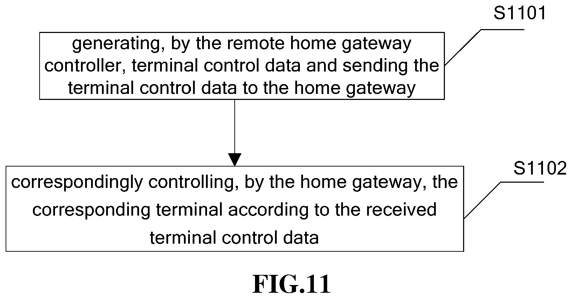

In order to better understand the present disclosure, further description is made in the following with reference to a specific smart home system. Referring to FIG. 10, the system includes a remote home gateway controller, a home gateway connected with the remote home gateway controller, and at least one terminal connected with the home gateway. A method for controlling the terminal based on the system is shown in FIG. 11, including:
Step 1101: generating, by the remote home gateway controller, terminal control data and sending the terminal control data to the home gateway; where
   the remote home gateway controller conducts logic operation to generate the terminal control data according to data fed back by the home gateway to the remote home gateway controller, preset service logic and adaptation data of the terminal acquired by the service logic; or
   the remote home gateway controller invokes the preset service logic according to a preset rule, and conducts logic operation to obtain the terminal control data according to the service logic and adaptation data read by the service logic.
Step 1102: correspondingly controlling, by the home gateway, the corresponding terminal according to the received terminal control data.

Preferably, this step includes:
the home gateway sends the terminal control data to the terminal to control the terminal when the terminal control data is judged to be terminal status control data; and
the home gateway displays the terminal control data to a user when the home gateway judges that the terminal control data is terminal control display data, selects corresponding operation instruction data according to an external control instruction (for example, operation conducted by a user), sends the operation instruction data to a terminal interaction module, and then sends the operation instruction data to the terminal to implement control of the terminal (when the operation selected by the user is to directly control the terminal), or sends the operation instruction data to the remote home gateway controller (when the operation selected by the user is that after the operation instruction data selected by the user is processed by the remote home gateway controller, the operation data is resent), so that the remote home gateway controller invokes corresponding service logic according to the operation instruction data and then conducts logic operation again to generate the terminal control data.

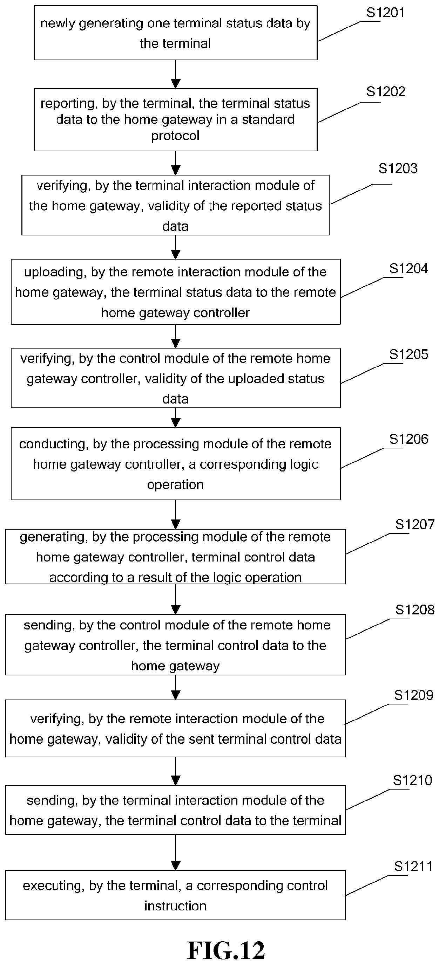

The foregoing two cases are respectively illustrated in the following:
Referring to FIG. 12, Figure 12 shows a schematic diagram in which the remote home gateway controller generates terminal control data according to terminal status data fed back by the terminal through the home gateway to control the terminal, including:
Step 1201: newly generating one terminal status data by the terminal;
Step 1202: reporting, by the terminal, terminal status data to the home gateway in a standard protocol;
Step 1203: verifying, by the terminal interaction module of the home gateway, the validity of the reported status data, including a legitimated verification, a format verification and so on;
Step 1204: uploading, by the remote interaction module of the home gateway, the terminal status data reported by the terminal to the remote home gateway controller;
Step 1205: verifying, by the control module of the remote home gateway controller, validity of the uploaded status data, including a legitimated verification, a format validation and so on;
Step 1206: conducting, by the processing module of the remote home gateway controller, a corresponding logic operation according to stored service logic;
Step 1207: generating, by the processing module of the remote home gateway controller, terminal control data according to a result of the logic operation, where the generated terminal control data is terminal status control data;
Step 1208: sending, by the control module of the remote home gateway controller, the terminal control data to the home gateway;
Step 1209: verifying, by the remote interaction module of the home gateway, validity of the sent terminal control data, including a legitimated verification, a format validation and so on;
Step 1210: sending, by the terminal interaction module of the home gateway, the terminal control data to the terminal; and
Step 1211: executing, by the terminal, a corresponding control instruction.

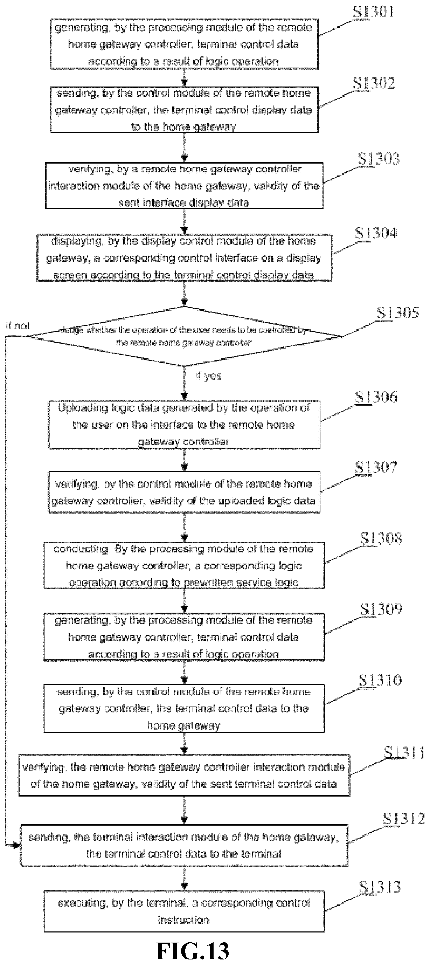

Referring to FIG. 13, Figure 13 shows a schematic flow chart in which terminal control display data is displayed on an interface through the home gateway and then control data is sent after the terminal control display data is generated and sent by the remote home gateway controller, including:
Step 1301: generating, by the processing module of the remote home gateway controller, terminal control data according to a result of logic operation, where the terminal control data is the terminal control display data;
Step 1302: sending, by the control module of the remote home gateway controller, the terminal control display data to the home gateway;
Step 1303: verifying, by a remote home gateway controller interaction module of the home gateway, validity of the sent interface display data, including a legitimated verification, a format validation and so on;
Step 1304: displaying, by the display control module of the home gateway, a corresponding control interface on a display screen according to the terminal control display data;
Step 1305: conducting operation on the display control module by the user, and judging whether the operation of the user needs to be processed and controlled by the remote home gateway controller; if yes, turning to Step 1306; if not, converting the user's operation instruction data into the terminal status control data, and turning to Step 1312;
Step 1306: uploading, by the remote home gateway controller interaction module of the home gateway, logic data generated by the operation of the user on the interface to the remote home gateway controller;
Step 1307: verifying, by the control module of the remote home gateway controller, validity of the uploaded logic data, including a legitimated verification, a format validation and so on;
Step 1308: conducting, by the processing module of the remote home gateway controller, a corresponding logic operation according to prewritten service logic;
Step 1309: generating, by the processing module of the remote home gateway controller, terminal control data according to a result of the logic operation, where the generated terminal control data is terminal status control data;
Step 1310: sending, by the control module of the remote home gateway controller, the terminal control data to the home gateway;
Step 1311: verifying, by the remote home gateway controller interaction module of the home gateway, validity of the sent terminal control data, including a legitimated verification, a format validation and so on;
Step 1312: sending, by the terminal interaction module of the home gateway, the terminal control data to the terminal; and
Step 1313: executing, by the terminal, a corresponding control instruction.

As can be seen, the remote home gateway controller provided by the present disclosure at least has following advantages:
when a new terminal is accessed to the home gateway, it is merely required to conduct a single upgrade on the remote home gateway controller, thereby simplifying upgrad operation and improving upgrade efficiency;
having terminal processing capacity and control capacity of an existing home gateway and "unlimited" expansion capability, thereby well solving a problem of home gateway performance limitation;
having terminal control display capacity of an existing home gateway, thereby controlling display interfaces of different terminals; and
being able to reduce types and quantities of home gateways and reduce management and maintenance cost.

The embodiments described above are meant to be interpreted as background information useful for understanding the invention, which is defined only by the appended set of claims.

## Claims

1. A remote home gateway controller, comprising: a processing module (31) and a control module (32), wherein
the processing module (31) is configured to generate terminal control data; and
the control module (32) is configured to access a home gateway and send the terminal control data to the home gateway so as to make the home gateway control a terminal according to the terminal control data; wherein the processing module (31) comprises a service storage submodule (41), a service calculation submodule (42) and a terminal adaptation submodule (43);
the service storage submodule (41) is configured to store service logic;
the terminal adaptation submodule (43) is configured to store adaptation data of various terminals for being read by corresponding service logic; and
the service calculation submodule (42) is configured to invoke corresponding service logic from service logic stored in the service storage submodule (41) to conduct a service logic operation so as to generate terminal control data;
wherein the terminal control data is generated by the remote home gateway controller invoking the corresponding service logic to read the adaptation data of the terminal and conducting a service logic operation according to the service logic and the adaptation data of the terminal and
wherein the adaptation data is converted data of the service logic operation of a terminal specific field in a standard protocol.

2. The remote home gateway controller of claim 1, wherein the control module (32) comprises: a gateway control submodule (51) and a terminal control submodule (52);
the gateway control submodule (51) is configured to access the home gateway and send data reported by the home gateway to the service calculation submodule (42); the data comprises at least one of terminal status data, interface display data and operation instruction data to be processed by the remote home gateway controller; and
the terminal control submodule (52) is configured to send the terminal control data to the home gateway.

3. The remote home gateway controller of claim 2, wherein
the service calculation submodule (42) is configured to
invoke corresponding service logic according to data sent by the gateway control submodule (51), and conduct logic operation to obtain the terminal control data according to the data sent by the gateway control submodule (51), the invoked service logic and adaptation data of the terminal read by the service logic; or
invoke corresponding service logic according to a preset rule, and conduct logic operation to obtain the terminal control data according to the service logic and adaptation data read by the service logic.

4. A home gateway, comprising: a remote interaction module (61) and a terminal interaction module (62), wherein
the remote interaction module (61) is configured to access the home gateway to a remote home gateway controller, upload terminal status data, which is sent by the terminal interaction module (62), to the remote home gateway controller, and receive terminal control data sent by the remote home gateway controller, wherein the terminal control data is generated by the remote home gateway controller invoking a service logic to read adaptation data of a terminal and conducting a service logic operation according to the service logic and the adaptation data of the terminal, wherein the adaptation data is converted data of the service logic operation of a terminal specific field in a standard protocol; and
the terminal interaction module (62) is configured to establish a connection with the terminal and send the terminal status data to the remote interaction module (61), and control the terminal according to the terminal control data.

5. The home gateway of claim 4, wherein the home gateway further comprises a display control module (63), and the remote interaction module (61) comprises a receiving submodule (71), a sending submodule (72) and a judging submodule (73), wherein
the receiving submodule (71) is configured to receive terminal status data sent by the terminal interaction module (62), send the terminal status data to the remote home gateway controller through the sending submodule (72), receive terminal control data sent by the remote home gateway controller and send the terminal control data to the judging submodule (73); and
the judging submodule (73) is configured to send the terminal control data to the terminal interaction module (62) through the sending submodule (72) when the terminal control data is judged to be terminal status control data, send the terminal control data to a corresponding terminal through the terminal interaction module (62), and send the terminal control data to the display control module (63) for display when the terminal control data is judged to be terminal control display data.

6. The home gateway of claim 5, wherein the display control module (63) comprises a display submodule and a selecting submodule;
the display submodule is configured to display the terminal control data; and
the selecting submodule is configured to select corresponding operation instruction data according to an external control instruction, and send the operation instruction data to the terminal interaction module (62) or the remote home gateway controller through the sending submodule (72).

7. A terminal control method, comprising:
generating (S1101), by a remote home gateway controller, terminal control data and sending the terminal control data to a home gateway; and
correspondingly controlling (S1102), by the home gateway, a terminal according to the terminal control data;
wherein the generating (S1101), by the remote home gateway controller, terminal control data comprises:
invoking corresponding service logic from stored service logic and reading stored adaptation data of a corresponding terminal by corresponding service logic, conducting service logic operation to generate the terminal control data according to the service logic and the adaptation data, wherein the adaptation data is converted data of the service logic operation of a terminal specific field in a standard protocol.

8. The terminal control method of claim 7, wherein the generating (S1101), by the remote home gateway controller, of terminal control data comprises:
conducting logic operation to generate the terminal control data according to data fed back by the home gateway to the remote home gateway controller, preset service logic and adaptation data of the terminal acquired by the service logic; wherein the data fed back by the home gateway to the remote home gateway controller comprising at least one of terminal status data, interface display data and operation instruction data that needs to be processed by the remote home gateway controller; or
invoking the preset service logic according to a preset rule, and conducting logic operation to obtain the terminal control data according to the service logic and adaptation data read by the service logic.

9. The terminal control method of claim 7 or 8, wherein correspondingly controlling (S1102), by the home gateway, the terminal according to the terminal control data comprises:
sending, by the home gateway, the terminal control data to the terminal when judging the terminal control data to be terminal status control data; and
displaying, by the home gateway, the terminal control data to a user when judging the terminal control data to be terminal control display data, selecting corresponding operation instruction data according to an external control instruction, and sending the operation instruction data to the terminal or the remote home gateway controller.

## Patentansprüche

1. Home-Gateway-Fernsteuerung, umfassend: ein Verarbeitungsmodul (31) und ein Steuerungsmodul (32), wobei
das Verarbeitungsmodul (31) ausgestaltet ist, um Endgerät-Steuerungsdaten zu erzeugen; und
das Steuerungsmodul (32) ausgestaltet ist, um auf ein Home-Gateway zuzugreifen und die Endgerät-Steuerungsdaten an das Home-Gateway zu senden, um zu bewirken, dass das Home-Gateway ein Endgerät gemäß den Endgerät-Steuerungsdaten steuert;
wobei das Verarbeitungsmodul (31) ein Dienstspeicherungsuntermodul (41), ein Dienstberechnungsuntermodul (42) und ein Endgerät-Anpassungsuntermodul (43) umfasst;
das Dienstspeicherungsuntermodul (41) ausgestaltet ist, um Dienstlogik zu speichern;
das Endgerät-Anpassungsuntermodul (43) ausgestaltet ist, um Anpassungsdaten von verschiedenen Endgeräten zu speichern, um durch entsprechende Dienstlogik gelesen zu werden; und
das Dienstberechnungsuntermodul (42) ausgestaltet ist, um entsprechende Dienstlogik von in dem Dienstspeicherungsuntermodul (41) gespeicherter Dienstlogik aufzurufen, um eine Dienstlogikoperation durchzuführen, um Endgerät-Steuerungsdaten zu erzeugen;
wobei die Endgerät-Steuerungsdaten durch die Home-Gateway-Fernsteuerung erzeugt werden, die die entsprechende Dienstlogik aufruft, um die Anpassungsdaten des Endgeräts zu lesen, und die eine Dienstlogikoperation gemäß der Dienstlogik und den Anpassungsdaten des Endgeräts durchführt, und
wobei die Anpassungsdaten umgewandelte Daten der Dienstlogikoperation eines endgerätspezifischen Feldes in einem Standardprotokoll sind.

2. Home-Gateway-Fernsteuerung nach Anspruch 1, wobei das Steuerungsmodul (32) Folgendes umfasst: ein Gateway-Steuerungsuntermodul (51) und ein EndgerätSteuerungsuntermodul (52);
wobei das Gateway-Steuerungsuntermodul (51) ausgestaltet ist, um auf das Home-Gateway zuzugreifen und Daten, die durch das Home-Gateway gemeldet werden, an das Dienstberechnungsuntermodul (42) zu senden; wobei die Daten mindestens eines von Endgerät-Zustandsdaten, Schnittstellen-Anzeigedaten und Operationsbefehlsdaten umfassen, die durch die Home-Gateway-Fernsteuerung zu verarbeiten sind; und
das Endgerätsteuerungsuntermodul (52) ausgestaltet ist, um die Endgerät-Steuerungsdaten an das Home-Gateway zu senden.

3. Home-Gateway-Fernsteuerung nach Anspruch 2, wobei
das Dienstberechnungsuntermodul (42) für Folgendes ausgestaltet ist:
Aufrufen entsprechender Dienstlogik gemäß Daten, die durch das Gateway-Steuerungsuntermodul (51) gesendet werden, und Durchführen von logischer Operation zum Erhalten der Endgerät-Steuerungsdaten gemäß den durch das Gateway-Steuerungsuntermodul (51) gesendeten Daten, der aufgerufenen Dienstlogik und Anpassungsdaten des Endgeräts, die durch die Dienstlogik gelesen werden; oder
Aufrufen entsprechender Dienstlogik gemäß einer voreingestellten Regel und Durchführen von logischer Operation zum Erhalten der Endgerät-Steuerungsdaten gemäß der Dienstlogik und Anpassungsdaten, die durch die Dienstlogik gelesen werden.

4. Home-Gateway, umfassend: ein Ferninteraktionsmodul (61) und ein Endgerät-Interaktionsmodul (62), wobei
das Ferninteraktionsmodul (61) ausgestaltet ist, um auf das Home-Gateway zu einer Home-Gateway-Fernsteuerung zuzugreifen, Endgerät-Zustandsdaten, die durch das Endgerät-Interaktionsmodul (62) gesendet werden, auf die Home-Gateway-Fernsteuerung hochzuladen und durch die Home-Gateway-Fernsteuerung gesendete Endgerät-Steuerungsdaten zu empfangen, wobei die Endgerät-Steuerungsdaten durch die Home-Gateway-Fernsteuerung erzeugt werden, die eine Dienstlogik aufruft, um Anpassungsdaten eines Endgeräts aufzurufen, und die eine Dienstlogikoperation gemäß der Dienstlogik und den Anpassungsdaten des Endgeräts durchführt, wobei die Anpassungsdaten umgewandelte Daten der Dienstlogikoperation eines endgerätspezifischen Feldes in einem Standardprotokoll sind; und
das Endgerät-Interaktionsmodul (62) ausgestaltet ist, um eine Verbindung mit dem Endgerät herzustellen und die Endgerät-Zustandsdaten an das Ferninteraktionsmodul (61) zu senden und das Endgerät gemäß den Endgerät-Steuerungsdaten zu steuern.

5. Home-Gateway nach Anspruch 4, wobei das Home-Gateway ferner ein Anzeigesteuerungsmodul (63) umfasst und das Ferninteraktionsmodul (61) ein Empfangsuntermodul (71), ein Sendeuntermodul (72) und ein Beurteilungsuntermodul (73) umfasst, wobei
das Empfangsuntermodul (71) ausgestaltet ist, um Endgerät-Zustandsdaten zu empfangen, die durch das Endgerät-Interaktionsmodul (62) gesendet werden, die Endgerät-Zustandsdaten durch das Sendeuntermodul (72) an die Home-Gateway-Fernsteuerung zu senden, durch die Home-Gateway-Fernsteuerung gesendete Endgerät-Steuerungsdaten zu empfangen und die Endgerät-Steuerungsdaten an das Beurteilungsuntermodul (73) zu senden; und
das Beurteilungsuntermodul (73) ausgestaltet ist, um die Endgerät-Steuerungsdaten durch das Sendeuntermodul (72) an das Endgerät-Interaktionsmodul (62) zu senden, wenn beurteilt wird, dass die Endgerät-Steuerungsdaten Endgerätzustandssteuerungsdaten sind, die Endgerät-Steuerungsdaten durch das Endgerät-Interaktionsmodul (62) an ein entsprechendes Endgerät zu senden und die Endgerät-Steuerungsdaten an das Anzeigesteuerungsmodul (63) zur Anzeige zu senden, wenn beurteilt wird, dass die Endgerät-Steuerungsdaten Endgerätsteuerungsanzeigedaten sind.

6. Home-Gateway nach Anspruch 5, wobei das Anzeigesteuermodul (63) ein Anzeigeuntermodul und ein Auswahluntermodul umfasst;
das Anzeigeuntermodul konfiguriert ist, um die Endgerät-Steuerungsdaten anzuzeigen; und
das Auswahluntermodul ausgestaltet ist, um entsprechende Operationsbefehlsdaten gemäß einem externen Steuerungsbefehl auszuwählen und die Operationsbefehlsdaten an das Endgerät-Interaktionsmodul (62) oder die Home-Gateway-Fernsteuerung durch das Sendeuntermodul (72) zu senden.

7. Endgerät-Steuerungsverfahren, umfassend:
Erzeugen (S1101) von Endgerätsteuerungsdaten durch eine Home-Gateway-Fernsteuerung und Senden der Endgerät-Steuerungsdaten an ein Home-Gateway; und
dementsprechend Steuern (S1102) eines Endgeräts gemäß den Endgerät-Steuerungsdaten durch das Home-Gateway;
wobei das Erzeugen (S1101) von Endgerät-Steuerungsdaten durch die Home-Gateway-Fernsteuerung Folgendes umfasst:
Aufrufen entsprechender Dienstlogik von gespeicherter Dienstlogik und Lesen von gespeicherten Anpassungsdaten eines entsprechenden Endgeräts durch entsprechende Dienstlogik, Durchführen von logischer Operation zum Erzeugen der Endgerät-Steuerungsdaten gemäß der Dienstlogik und Anpassungsdaten, wobei die Anpassungsdaten umgewandelte Daten der Dienstlogikoperation eines endgerätspezifischen Feldes in einem Standardprotokoll sind.

8. Endgerät-Steuerungsverfahren nach Anspruch 7, wobei das Erzeugen (S1101) von Endgerät-Steuerungsdaten durch die Home-Gateway-Fernsteuerung Folgendes umfasst:
Durchführen von logischer Operation zum Erzeugen der Endgerät-Steuerungsdaten gemäß durch das Home-Gateway an die Home-Gateway-Fernsteuerung rückgemeldeter Daten, voreingestellter Dienstlogik und Anpassungsdaten des Endgeräts, die durch die Dienstlogik erfasst werden; wobei die durch das Home-Gateway an die Home-Gateway-Fernsteuerung zurückgeführten Daten mindestens eines von Endgerät-Zustandsdaten, Schnittstellen-Anzeigedaten und Operationsbefehlsdaten umfassen, die durch die Home-Gateway-Fernsteuerung verarbeitet werden müssen; oder
Aufrufen der voreingestellten Dienstlogik gemäß einer voreingestellten Regel und Durchführen von logischer Operation zum Erhalten der Endgerät-Steuerungsdaten gemäß der Dienstlogik und durch die Dienstlogik gelesenen Anpassungsdaten.

9. Endgerät-Steuerungsverfahren nach Anspruch 7 oder 8, wobei das entsprechende Steuern (S1102) des Endgeräts durch das Home-Gateway gemäß den Endgerät-Steuerungsdaten Folgendes umfasst:
Senden der Endgerät-Steuerungsdaten durch das Home-Gateway an das Endgerät, wenn beurteilt wird, dass die Endgerät-Steuerungsdaten EndgerätZustandssteuerungsdaten sind; und
Anzeigen der Endgerät-Steuerungsdaten durch das Home-Gateway für einen Benutzer, wenn beurteilt wird, dass die Endgerät-Steuerungsdaten EndgerätSteuerungsanzeigedaten sind, Auswählen entsprechender Operationsbefehlsdaten gemäß einem externen Steuerbefehl und Senden der Operationsbefehlsdaten an das Endgerät oder die Home-Gateway-Fernsteuerung.

## Revendications

1. Contrôleur de passerelle domestique à distance, comprenant : un module de traitement (31) et un module de contrôle (32), dans lequel
le module de traitement (31) est configuré pour générer des données de contrôle de terminal ; et
le module de contrôle (32) est configuré pour accéder à une passerelle domestique et envoyer les données de contrôle de terminal à la passerelle domestique afin de faire que la passerelle domestique contrôle un terminal selon les données de contrôle de terminal ;
dans lequel le module de traitement (31) comprend un sous-module de stockage de service (41), un sous-module de calcul de service (42) et un sous-module d'adaptation de terminal (43) ;
le sous-module de stockage de service (41) est configuré pour stocker une logique de service ;
le sous-module d'adaptation de terminal (43) est configuré pour stocker des données d'adaptation de divers terminaux destinées à être lues par une logique de service correspondante ; et
le sous-module de calcul de service (42) est configuré pour invoquer une logique de service correspondante à partir d'une logique de service stockée dans le sous-module de stockage de service (41) pour réaliser une opération de logique de service afin de générer des données de contrôle de terminal ;
dans lequel les données de contrôle de terminal sont générées par le contrôleur de passerelle domestique à distance invoquant la logique de service correspondante pour lire les données d'adaptation du terminal et réalisant une opération de logique de service selon la logique de service et les données d'adaptation du terminal et
dans lequel les données d'adaptation sont des données converties de l'opération de logique de service d'un champ spécifique de terminal dans un protocole standard.

2. Contrôleur de passerelle domestique à distance selon la revendication 1, dans lequel le module de contrôle (32) comprend : un sous-module de contrôle de passerelle (51) et un sous-module de contrôle de terminal (52) ;
le sous-module de contrôle de passerelle (51) est configuré pour accéder à la passerelle domestique et envoyer des données rapportées par la passerelle domestique au sous-module de calcul de service (42) ; les données comprennent au moins l'une parmi des données de statut de terminal, des données d'affichage d'interface et des données d'instruction d'opération à traiter par le contrôleur de passerelle domestique à distance ; et
le sous-module de contrôle de terminal (52) est configuré pour envoyer les données de contrôle de terminal à la passerelle domestique.

3. Contrôleur de passerelle domestique à distance selon la revendication 2, dans lequel
le sous-module de calcul de service (42) est configuré pour
invoquer une logique de service correspondante selon des données envoyées par le sous-module de contrôle de passerelle (51), et réaliser une opération de logique pour obtenir les données de contrôle de terminal selon les données envoyées par le sous-module de contrôle de passerelle (51), la logique de service invoquée et des données d'adaptation du terminal lues par la logique de service ; ou
invoquer une logique de service correspondante selon une règle prédéfinie, et réaliser une opération de logique pour obtenir les données de contrôle de terminal selon la logique de service et des données d'adaptation lues par la logique de service.

4. Passerelle domestique, comprenant : un module d'interaction à distance (61) et un module d'interaction de terminal (62), dans laquelle
le module d'interaction à distance (61) est configuré pour accéder à la passerelle domestique à un contrôleur de passerelle domestique à distance, téléverser des données de statut de terminal, qui sont envoyées par le module d'interaction de terminal (62), au contrôleur de passerelle domestique à distance, et recevoir des données de contrôle de terminal envoyées par le contrôleur de passerelle domestique à distance, où les données de contrôle de terminal sont générées par le contrôleur de passerelle domestique à distance invoquant une logique de service pour lire des données d'adaptation d'un terminal et réalisant une opération de logique de service selon la logique de service et les données d'adaptation du terminal, où les données d'adaptation sont des données converties de l'opération de logique de service d'un champ spécifique de terminal dans un protocole standard ; et
le module d'interaction de terminal (62) est configuré pour établir une connexion avec le terminal et envoyer les données de statut de terminal au module d'interaction à distance (61), et contrôler le terminal selon les données de contrôle de terminal.

5. Passerelle domestique selon la revendication 4, dans laquelle la passerelle domestique comprend en outre un module de contrôle d'affichage (63), et le module d'interaction à distance (61) comprend un sous-module de réception (71), un sous-module d'envoi (72) et un sous-module de jugement (73), dans laquelle
le sous-module de réception (71) est configuré pour recevoir des données de statut de terminal envoyées par le module d'interaction de terminal (62), envoyer les données de statut de terminal au contrôleur de passerelle domestique à distance par l'intermédiaire du sous-module d'envoi (72), recevoir des données de contrôle de terminal envoyées par le contrôleur de passerelle domestique à distance et envoyer les données de contrôle de terminal au sous-module de jugement (73) ; et
le sous-module de jugement (73) est configuré pour envoyer les données de contrôle de terminal au module d'interaction de terminal (62) par l'intermédiaire du sous-module d'envoi (72) lorsqu'il est jugé que les données de contrôle de terminal sont des données de contrôle de statut de terminal, envoyer les données de contrôle de terminal à un terminal correspondant par l'intermédiaire du module d'interaction de terminal (62), et envoyer les données de contrôle de terminal au module de contrôle d'affichage (63) pour l'affichage lorsqu'il est jugé que les données de contrôle de terminal sont des données d'affichage de contrôle de terminal.

6. Passerelle domestique selon la revendication 5, dans laquelle le module de contrôle d'affichage (63) comprend un sous-module d'affichage et un sous-module de sélection ;
le sous-module d'affichage est configuré pour afficher les données de contrôle de terminal ; et
le sous-module de sélection est configuré pour sélectionner des données d'instruction d'opération correspondantes selon une instruction de contrôle externe, et envoyer les données d'instruction d'opération au module d'interaction de terminal (62) ou au contrôleur de passerelle domestique à distance par l'intermédiaire du sous-module d'envoi (72).

7. Procédé de contrôle de terminal, comprenant :
la génération (S1101), par un contrôleur de passerelle domestique à distance, de données de contrôle de terminal et l'envoi des données de contrôle de terminal à une passerelle domestique ; et
le contrôle correspondant (S1102), par la passerelle domestique, d'un terminal selon les données de contrôle de terminal ;
dans lequel la génération (S1101), par le contrôleur de passerelle domestique à distance, de données de contrôle de terminal comprend :
l'invocation d'une logique de service correspondante à partir d'une logique de service stockée et la lecture de données d'adaptation stockées d'un terminal correspondant par une logique de service correspondante, la réalisation d'une opération de logique de service pour générer les données de contrôle de terminal selon la logique de service et les données d'adaptation, où les données d'adaptation sont des données converties de l'opération de logique de service d'un champ spécifique de terminal dans un protocole standard.

8. Procédé de contrôle de terminal selon la revendication 7, dans lequel la génération (S1101), par le contrôleur de passerelle domestique à distance, de données de contrôle de terminal comprend :
la réalisation d'une opération de logique pour générer les données de contrôle de terminal selon des données réinjectées par la passerelle domestique au contrôleur de passerelle domestique à distance, une logique de service prédéfinie et des données d'adaptation du terminal acquises par la logique de service ; où les données réinjectées par la passerelle domestique au contrôleur de passerelle domestique à distance comprennent au moins l'une parmi des données de statut de terminal, des données d'affichage d'interface et des données d'instruction d'opération qui ont besoin d'être traitées par le contrôleur de passerelle domestique à distance ; ou
l'invocation de la logique de service prédéfinie selon une règle prédéfinie, et la réalisation d'une opération de logique pour obtenir les données de contrôle de terminal selon la logique de service et des données d'adaptation lues par la logique de service.

9. Procédé de contrôle de terminal selon la revendication 7 ou 8, dans lequel le contrôle correspondant (S1102), par la passerelle domestique, du terminal selon les données de contrôle de terminal comprend :
l'envoi, par la passerelle domestique, des données de contrôle de terminal au terminal lors du jugement selon lequel les données de contrôle de terminal sont des données de contrôle de statut terminal ; et
l'affichage, par la passerelle domestique, des données de contrôle de terminal à un utilisateur lors du jugement selon lequel les données de contrôle de terminal sont des données d'affichage de contrôle de terminal, la sélection de données d'instruction d'opération correspondantes selon une instruction de contrôle externe, et l'envoi des données d'instruction d'opération au terminal ou au contrôleur de passerelle domestique à distance.
